# EUROPEAN PATENT APPLICATION

(11) **EP 3 855 114 A1**
(43) Date of publication of application: **28.07.2021**
(21) Application number: 20153142.3
(22) Date of filing: 22.01.2020
(51) Int. Cl.: G01C 11/02, B60P 3/40, F03D 13/40, G01C 11/04, G06Q 10/06, G06N 3/00

(54) **A METHOD AND AN APPARATUS FOR COMPUTER-IMPLEMENTED ANALYZING OF A ROAD TRANSPORT ROUTE**

(71) Applicant: Siemens Gamesa Renewable Energy A/S, 7330 Brande (DK)
(72) Inventor: Gollnick, Bert, 22145 Hamburg (DE)
(74) Representative: Aspacher, Karl-Georg

(57) **Abstract**

The invention refers to a method for computer-implemented analyzing of a road transport route intended to be used for transport of a heavy load (HL) from an origin to a destination. The invention comprises the steps of i) obtaining a number of images (IM) of the transport route (TR), the number of images (IM) being images taken by a drone or satellite camera system, where each of the number of images (IM) comprises a different road section (RS) of the complete transport route (TR) and an peripheral area (PA) adjacent to the respective road section (RS); ii) determining objects (O) and their location in the peripheral area (PA) of the road section (RS) by processing each of the number of images (IM) by a first trained data driven model (MO_1), where the number of images (IM) is fed as a digital input to the first trained data driven model (MO_1) and where the first trained data driven model (MO_1) provides the objects (O), if any, and their location as a digital output; and iii) determining critical objects (CO) from the number of determined objects (O) along the road transport route (TR), the critical objects (CO) being potential obstacles for road transportation due to overlap with the heavy load, by a simulation of the transport along the road transport route (TR) by processing at least those images, as relevant images (RIM), of the number of images (IM) having at least one determined object using a second trained data driven model (MO_2), where the number of relevant images (RIM) is fed as a digital input to the second trained data driven model (MO_2) and the second trained data driven model (MO_2) provides the critical objects (CO).

## Description

The invention refers to a method and an apparatus for computer-implemented analyzing of a road transport route intended to be used for transport of a heavy load, in particular a component of a wind turbine, such as a rotor blade or a nacelle, from an origin to a destination.

Wind turbine components or other large components need to be transported from a production site to an operation site. Road transportation of such large components is becoming more and more complicated, the longer the component to be transported is and/or the bigger the cross-section is. For road transportation of the component from an origin, typically the production site or a transfer station (such as a port facility) to a destination, typically the operation site or a transfer station, it is essential to identify critical locations of the road transportation in advance. Critical locations may be curves and obstacles (such as masts, walls, trees, and so on) close to the road on which the component is transported by a heavy-load transporter or a lorry. Critical locations need to be evaluated in advance to avoid problems during transport. At the moment, identifying critical locations is a manual process which is time consuming and costly.

It is an object of the present invention to provide an easy method in order to find a suitable transport route for transport of a heavy load from an origin to a destination.

This object is solved by the independent claims. Preferred embodiments of the invention are defined in the dependent claims.

The invention provides a method for computer-implemented analyzing of a road transport route intended to be used for transport of heavy load from an origin to a destination. The heavy load may be in particular a component of a wind turbine such as a rotor blade or a nacelle. However, the heavy load may be any other large and in particular long component as well. The origin may be a place of production, such as a production site or a harbor where the heavy load is reloaded to a heavy-load transporter. The destination may be an operation site, such as an area where the component is to be mounted or reloaded to a different transportation means (such as a train or ship) or a factory or plant.

According to the method of the invention, the following steps i) to iii) are performed for analyzing an intended road transport route.

In step i), a number of images of the transport route is obtained. The term "obtaining an image" or "obtaining a number of images" means that the image is received by a processor implementing the method of the invention. The obtained images are digital images. The number of images is taken by a camera or camera system installed on a drone or satellite or satellite system. Each of the number of images comprises a different road section of the complete road transport route and a peripheral area adjacent to the respective road section. The number of images with their different road sections of the complete transport route enables an analysis of the complete road transport route by composing the number of images along related road sections.

In step ii), objects and their location in the peripheral area of the road section are determined by processing each of the number of images by a first trained data driven model, where the number of images is fed as a digital input to the first trained data driven model and where the first trained data driven model provides the objects, if any, and their location as a digital output. The objects in the peripheral area of the road section may be potential obstacles for the road transportation due to overlap with the heavy load during transport of the heavy load along the road transport route. Whether the determined objects are potential obstacles or not will be determined in step iii).

In step ii), an easy and straight forward method for determining objects and their location in the peripheral area of the road section based on drone or satellite images is determined. To do so, a first trained data driven model is used. The first model is trained by training data comprising a plurality of images of different road sections taken by a camera or camera system installed on a drone or satellite or satellite system together with the information about an object class.

In step iii), critical objects from the number of determined objects along the road transport route are determined. The critical objects are potential obstacles for the road transportation due to overlap with the heavy load during transport of the heavy load. Determining the critical objects is done by a simulation of the transport along the road transport route by processing at least those images, as relevant images, of the number of images having at least one determined object, using a second trained data driven model, where the number of relevant images is fed as a digital input to the second trained data driven model and the second trained data driven model provides the critical objects for further evaluation.

The method according to step iii) provides an easy and straightforward method for determining critical objects being potential obstacles for road transportation due to overlap with the heavy load during transport based on relevant images identified before. To do so, a second trained data driven model is used. This second model is trained by training data comprising a plurality of images annotated with information provided by the first data driven model from step ii) or manual annotation together with the information about an object being a critical object because of a potential overlap with the heavy load during road transport.

Any known data driven model being learned by machine learning may be used in the method according to the invention. In a particularly preferred embodiment, the first and/or the second trained data driven model is a neural network, preferably a convolutional neural network. Convolutional neural networks are particularly suitable for processing image data. Nevertheless, other trained data driven models may also be implemented in the method of the invention, e.g. models based on decision trees or support vector machines.

In a preferred embodiment of the invention, the first trained data driven model is based on semantic segmentation. Semantic segmentation is known to the skilled people in the field of data driven models. Semantic segmentation is a step in the progression from coarse to fine inference. A semantic segmentation architecture can be thought of as an encoder network followed by a decoder network. The encoder is usually a pretrained classification network followed by the decoder network. The task of the decoder is to semantically project the discriminative features learned by the encoder onto the pixel space to get a dense classification. An image to be processed can be located at classification, which consists of making a prediction for the whole input (image). Semantic segmentation takes the idea of image-classification one step further and provides classes on a pixel-base rather than on an overall image-base. Hence, semantic segmentation achieves fine-grained inference by making dense predictions inferring labels for every pixel, so that each pixel is labelled with the class of its enclosing object or region.

A more detailed description how to do semantic segmentation using deep learning can be taken from the paper [1] or the article [2].

In another preferred embodiment, the location of a determined object is defined in a given coordinate system and/or a given relation information defining a distance relative to the road section. The given coordinate system may be an arbitrary coordinate system. Preferably, for defining the location latitude and longitude may be used. As the coordinates of the street are known, for example from maps used by current satellite navigation systems, a distance of the determined object relative to the road section can be determined. The relation information may comprise, in addition, a length of the object running in parallel to a part of the road section as well.

According to a further preferred embodiment, a height of a determined object is determined by processing an additional image of the road section, the additional image being an image taken from street-level perspective. For example, the route can be followed by a car in advance. The car has a camera installed and creates images. Together with location information from a satellite navigation system, e.g. GPS or Glonass, precise coordinates of objects aside and along the transport route are available for each image. An object detection algorithm can detect and classify objects in the image and match them with the objects found in step ii). Using street-level images enables to derive heights of determined objects in the peripheral area of the road sections of the road transport route.

According to a further preferred embodiment, steps i) to iii) are conducted for a plurality of different road transportation routes where the road transportation route having the least number of critical objects is provided for further evaluation. In other words, the suggested method can be used as an optimization algorithm to find out the most suitable route for road transportation purposes.

In a further preferred embodiment of the invention, an information about the critical object or critical objects and its or their location is output via a user interface. E.g., the critical object or objects and its or their location themselves may be output via the user interface. Additionally or alternatively, an information relating to a specific road section comprising critical objects may be output. Thus, a human operator is informed about critical road sections so that he can initiate appropriate analysis whether to find out that the road section can be used for transportation or not. Preferably, the user interface comprises a visual user interface but it may also comprise a user interface of another type.

Besides the above method, the invention refers to an apparatus for computer-implemented analysis of a road transport route intended to be used for transport of a heavy load, in particular a component of a wind turbine, such as a rotor blade or nacelle, from an origin to a destination, wherein the apparatus comprises a processor configured to perform the method according to the invention or one or more preferred embodiments of the method according to the invention.

Moreover, the invention refers to a computer program product with a program code, which is stored on a non-transitory machine-readable carrier, for carrying out the method according to the invention or one or more preferred embodiments thereof when the program code is executed on a computer.

Furthermore, the invention refers to a computer program with a program code for carrying out the method according to the invention or one or more preferred embodiments thereof when the program code is executed on a computer.

An embodiment of the invention will now be described in detail with respect to the accompanying drawings.
- Fig. 1: shows a schematic illustration of a road section as a part of a road transport route with objects in the peripheral area of the road section where at least some of the objects are critical with respect to the transport of a heavy load.
- Fig. 2: is a schematic illustration of a controller for performing an embodiment of the invention.

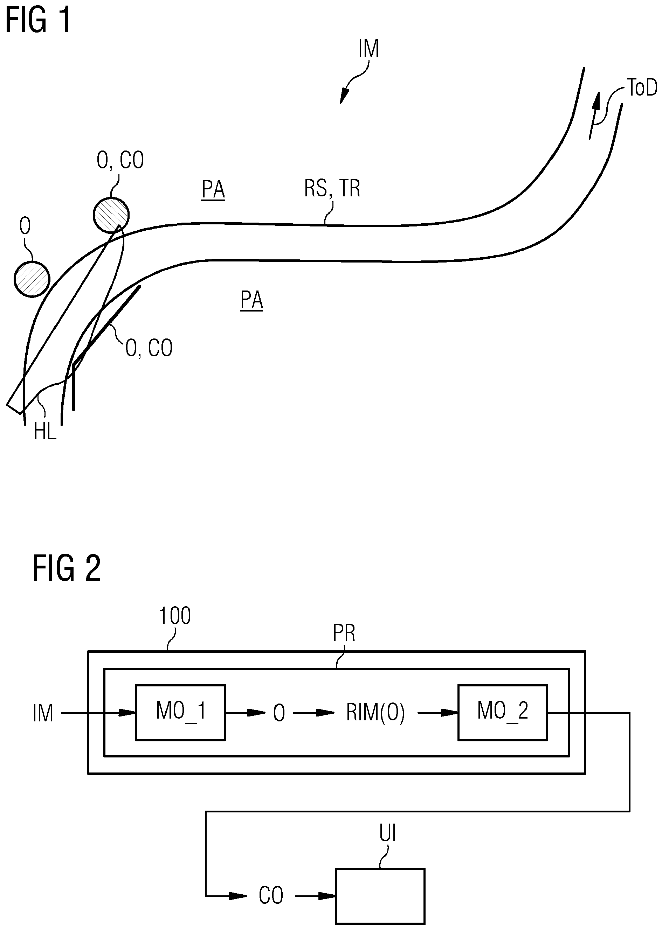

Fig. 1 shows an image IM being taken by a camera or camera system installed on a drone or satellite or satellite system. The image IM illustrates a road section RS of a road transport route TR intended to be used for transport of a heavy load HL from a not shown origin to a not shown destination. The heavy load may, in particular, be a component of a wind turbine, such as a rotor blade or nacelle, or any other large component. The road section RS shown in the image IM consists of two curves, a right turn followed by a left turn. The direction of transport of the heavy load HL is indicated by arrow ToD. Peripheral areas PA close to the right turn comprise three different objects O, e.g. trees, masts, walls and so on. As can be easily seen by Fig. 1, objects O additionally denoted with CO constitute critical objects CO being potential obstacles for road transportation due to overlap with the heavy load HL. Hence, further investigation by an analyst is necessary whether the critical objects CO are insurmountable obstacles or obstacles which can be passed by the heavy load HL, e.g. by the possibility of temporal removal.

For analyzing the road transport route TR intended to be used for transport of the heavy load HL from the origin to the destination, a plurality of images IM has to be analyzed for potential critical objects. The method as described in the following provides an easy method to detect potential critical objects which are subject for further evaluation by a data analyst.

To do so, a number of images IM of the transport route TR is obtained. The number of images are images taken by a camera or camera system installed on a drone or satellite, where each of the number of images IM comprises different road sections RS of the complete transport route TR and the peripheral area PA adjacent to the respective road section RS. The respective images of the camera or cameras of the drone or satellite or satellite system are transferred by a suitable communication link to a controller 100 (see Fig. 2) implemented for carrying out the present invention. The controller 100 illustrated in Fig. 2 comprises the processor PR implementing a first and a second trained data driven model MO_1, MO_2 where the first trained data driven model MO_1 receives the respective number of images IM as a digital input and providing objects O in the peripheral areas PA adjacent to the respective road section RS, if any, and their location as a digital output. The location of detected objects O can be defined in a given coordinate system (such as a coordinate system using latitude and longitude coordinates or any other suitable coordinate system) and/or a given relation information defining, for example, a distance of each of the objects O relative to the road section RS.

In the embodiment described herein, the first trained data driven model MO_1 is based on a convolutional neural network having been learned beforehand by training data. In particular, the first trained data driven model MO_1 is based on semantic segmentation which is a known data driven model to detect and classify objects O as output of the data driven model MO_1. The training data comprise a plurality of images of different road sections taken by a drone or satellite camera system together with the information of the objects and its classes occurring in the respective image. Convolutional neural networks as well as semantic segmentation are well-known from the prior art and are particularly suitable for processing digital images. A convolutional neural network comprises convolutional layers typically followed by convolutional layers or pooling layers as well as fully connected layers in order to determine at least one property of the respective image where the property according to the invention is an object and its class.

In the embodiment of Fig. 2, the object O produced as an output of the first data driven model MO 1 is used as further input being processed by the second data driven model MO_2. The second data driven model MO_2 receives those images, as relevant images RIM, of the number of images IM having at least one determined object O to output critical objects CO from the number of determined objects O along the road transport route TR. The critical objects CO are potential obstacles for the road transportation due to overlap with the heavy load HL. The image IM shown in Fig. 1 would therefore be regarded to be a relevant image to be evaluated by the second data driven model MO 2. The second data driven model MO_2 aims to simulate the transport of the heavy load HL along the road transport route TR. The second trained data driven model MO_2 provides the critical objects CO as output for further evaluation by the data analyst.

In the embodiment described herein, the second trained data driven model MO_2 is based on a convolutional neural network having been learned beforehand by training data. The training data comprise, as before, a plurality of images of road sections RS together with the information whether objects occurring in the respective image are critical objects.

In the embodiment of Fig. 2, the critical objects CO produced as an output of the second model MO_2 lead to an output on a user interface UI which is only shown schematically. Preferably, the user interface UI comprises a display. The user interface provides information for a human operator or analyst. The output based on the critical objects CO may be the type of an object, the location with respect to the road section RS and the relevant image RIM to enable further investigation.

In addition, the height of an object determined in step ii) can be determined by processing an additional image of the road section, where the additional image is an image taken from street-level perspective. For example, the additional image can be taken by a car-installed camera. An object detection algorithm can detect and classify objects in the images, together with location information from a satellite navigation system to provide precise coordinates for available objects in each image and match the coordinates with the objects found by the first data driven model MO_2. Using street-level images enables to derive heights of determined objects in the peripheral area of the road sections of the road transport route.

By the method as described above, one possible route can be evaluated. In another preferred embodiment, more possible routes may be evaluated. For each proposed route drone or satellite images are obtained for the complete route and analyzed as described above. The route having the least critical objects may be suggested as a suitable route on the user interface UI.

The invention as described in the foregoing has several advantages. Particularly, an easy and straight forward method is provided in order to detect critical objects along a road transport route for a heavy load in order to detect potential overlaps. To do so, objects and critical objects are determined based on images of a drone or satellite camera system via two different suitably trained data driven models. The planning time to determine a suitable route for road transport of heavy load can be provided with less time compared to manual investigation. The process is less error-prone because human analysts are supported, as they can concentrate on critical locations.

### References

[1] Jonathan Long ,Evan Shelhamer, and Trevor Darrel "Fully Convolutional Networks for Semantic Segmentation" published under https://people.eecs.berkeley.edu/∼jonlong/long_shelhame r_fcn.pdf
[2] James Le "How to do Semantic Segmentation using Deep learning" published on May 3, 2018 under https://medium.com/nanonets/how-to-do-image-segmentation-using-deep-learning-c673cc5862ef.

## Claims

1. A method for computer-implemented analyzing of a road transport route intended to be used for transport of a heavy load, in particular components of a wind turbine, from an origin to a destination, comprising the steps of:
i) obtaining a number of images (IM) of the transport route (TR), the number of images (IM) being images taken by a camera system installed on a drone or satellite, where each of the number of images (IM) comprises a different road section (RS) of the complete transport route (TR) and an peripheral area (PA) adjacent to the respective road section (RS);
ii) determining objects (O) and their location in the peripheral area (PA) of the road section (RS) by processing each of the number of images (IM) by a first trained data driven model (MO_1), where the number of images (IM) is fed as a digital input to the first trained data driven model (MO 1) and where the first trained data driven model (MO_1) provides the objects (O), if any, and their location as a digital output;
iii) determining critical objects (CO) from the number of determined objects (O) along the road transport route (TR), the critical objects (CO) being potential obstacles for road transportation due to overlap with the heavy load, by a simulation of the transport along the road transport route (TR) by processing at least those images, as relevant images (RIM), of the number of images (IM) having at least one determined object, using a second trained data driven model (MO_2), where the number of relevant images (RIM) is fed as a digital input to the second trained data driven model (MO_2) and the second trained data driven model (MO_2) provides the critical objects (CO) for further evaluation.

2. The method according to claim 1, wherein the first and/or second trained data driven model (MO 1, MO 2) is a neural network, preferably a Convolutional Neural Network.

3. The method according to claim 1 or 2, wherein the first trained data driven model (MO_1) is based on semantic segmentation.

4. The method according to one of the preceding claims, wherein the location of a determined object (O) is defined in a given coordinate system and/or a given relation information defining a distance relative to the road section (RS).

5. The method according to one of the preceding claims, wherein a height of a determined object (O) is determined by processing an additional image of the road section (RS), the additional image being an image taken from a street-level perspective.

6. The method according to one of the preceding claims, wherein steps i) to iii) are conducted for a plurality of different road transportation routes (TR) where the road transportation route (TR) having the least number of critical objects (CO) is provided for further evaluation.

7. The method according to one of the preceding claims, wherein an information about the critical object (CO) or critical objects (CO) and its or their location is output via a user interface (UI).

8. An apparatus for computer-implemented analysis of a road transport route intended to be used for transport of a heavy load, in particular components of a wind turbine, from an origin to a destination, wherein the apparatus (4) comprises a processor (PR) configured to perform the following steps:
i) obtaining a number of images (IM) of the transport route (TR), the number of images (IM) being images taken by a camera system installed on a drone or satellite, where each of the number of images (IM) comprises a different road section (RS) of the complete transport route (TR) and an peripheral area (PA) adjacent to the respective road section (RS);
ii) determining objects (O) and their location in the peripheral area (PA) of the road section (RS) by processing each of the number of images (IM) by a first trained data driven model (MO_1), where the number of images (IM) is fed as a digital input to the first trained data driven model (MO_1) and where the first trained data driven model (MO_1) provides the objects (O), if any, and their location as a digital output;
iii) determining critical objects (CO) from the number of determined objects (O) along the road transport route (TR), the critical objects (CO) being potential obstacles for road transportation due to overlap with the heavy load, by a simulation of the transport along the road transport route (TR) by processing at least those images, as relevant images (RIM), of the number of images (IM) having at least one determined object, using a second trained data driven model (MO 2), where the number of relevant images (RIM) is fed as a digital input to the second trained data driven model (MO_2) and the second trained data driven model (MO_2) provides the critical objects (CO) for further evaluation.

9. The apparatus according to claim 8, wherein the apparatus (4) is configured to perform a method according to one of claims 2 to 7.

10. A computer program product with program code, which is stored on a non-transitory machine-readable carrier, for carrying out a method according to one of claims 1 to 7 when the program code is executed on a computer.
